# EUROPEAN PATENT SPECIFICATION

(11) **EP 4 375 385 B1**
(45) Date of publication and mention of the grant of the patent: **28.10.2026**
(21) Application number: 22845846.9
(22) Date of filing: 14.07.2022
(51) Int. Cl.: C22B 3/04, C22B 3/44, C22B 3/46, C22B 7/00, C22B 15/00, C22B 23/00, H01M 10/54, C22B 1/00, C22B 3/08, C22B 3/00

(54) **METHOD FOR PROCESSING ALLOY**
VERFAHREN ZUR VERARBEITUNG EINER LEGIERUNG
PROCÉDÉ DE TRAITEMENT D'UN ALLIAGE

(30) Priority: 20.07.2021 JP 2021119365
(43) Date of publication of application: 29.05.2024
(73) Proprietor: Sumitomo Metal Mining Co., Ltd., Tokyo 105-8716 (JP)
(72) Inventor: TAKENOUCHI, Hiroshi, Niihama-shi, Ehime 792-0002 (JP); HEGURI, Shin-ichi, Niihama-shi, Ehime 792-0002 (JP); ASANO, Satoshi, Niihama-shi, Ehime 792-0002 (JP); SHOUJI, Hirofumi, Niihama-shi, Ehime 792-0002 (JP); MATSUOKA, Itsumi, Niihama-shi, Ehime 792-0002 (JP); SANJO, Shota, Niihama-shi, Ehime 792-0002 (JP); MATSUGI, Takumi, Niihama-shi, Ehime 792-0002 (JP)
(74) Representative: Watermeyer, Nicholas
(86) International application number: PCT/JP2022/027717
(87) International publication number: WO 2023/002912

(56) References cited:
- EP-A1- 3 690 068
- JP-A- 2015 183 292
- JP-A- 2015 183 292
- JP-A- 2019 065 346
- JP-A- 2019 077 912
- JP-A- 2019 077 913
- JP-A- 2019 108 586

## Description

### TECHNICAL FIELD

The present invention relates to an alloy processing method for producing a nickel- and/or cobalt-containing solution from an alloy including nickel and/or cobalt and copper.

### BACKGROUND ART

Lithium ion batteries (hereinafter also referred to as "LIBs"), which have lightweight and high power characteristics, are installed in vehicles, such as electric vehicles and hybrid vehicles, and in electronic devices, such as cell phones, smartphones, and personal computers.

An LIB has a structure where an outer case made of a metal, such as aluminum or iron, or a plastic, such as polyvinyl chloride houses: a negative electrode material including a copper foil as a negative current collector and a negative electrode active material, such as graphite, bonded to the surface of the negative electrode current collector; a positive electrode material including an aluminum foil as a positive electrode current collector and a positive electrode active material, such as lithium nickelate or lithium cobaltate, bonded to the surface of the positive electrode current collector; and a separator made of a porous resin film, such as a porous polypropylene film, the negative and positive electrode materials and the separator being impregnated with an organic solvent including an electrolyte, such as lithium hexafluorophosphate (LiPF₆), as an electrolytic solution.

After operating for a certain period in vehicles or electronic devices as mentioned above, LIBs will no longer be able to operate due to the degradation of the vehicles or electronic devices or the end of their own lifetime, which will result in discarded lithium ion batteries (discarded LIBs). Discarded LIBs also include defective products occurring in the LIB manufacturing process.

These discarded LIBs contain valuable components, such as nickel, cobalt, and copper, which are desired to be recovered and reused for economical use of resources.

In the conventional art, a common process widely used to efficiently recover valuable components from devices, parts, or other materials including metals includes a pyrometallurgical process that is based on the principle of pyrometallurgy and includes introducing the materials into a furnace for melting at high temperature; and separating a metallic material including the valuable components from other materials in the form of slag. For example, Patent Document 1 discloses a method of recovering valuable metals using a pyrometallurgical process. The method disclosed in Patent Document 1 can be used for recovering valuable metals from discarded LIBs so that copper alloys containing nickel and cobalt can be obtained.

Such a pyrometallurgical process (hereinafter also referred to as "dry process") advantageously enables a variety of impurities to be separated at a time, although it is disadvantageously energy-consuming since it uses a furnace for heating at high temperatures. Such a pyrometallurgical process is also advantageous in that the resulting slag is chemically stable, less likely to have an impact on the environment, and easy to deal with.

However, such a pyrometallurgical process has a problem in that when it is used for treating discarded LIBs, some of the valuable components (in particular, cobalt) are almost entirely distributed into the slag, which means an unavoidable loss in cobalt recovery. Moreover, the metallic material resulting from the pyrometallurgical process is an alloy including coexisting valuable components, which needs to be subjected to refining and impurity removal such that the coexisting valuable components can be individually separated from the alloy and reused.

A method usually used for separating elements in the pyrometallurgical process includes gradually cooling a high-temperature molten material to separate, for example, copper and lead or lead and zinc. However, when copper and nickel are main components, such as those in discarded LIBs, they will uniformly melt together in all composition ranges, which means that the gradual cooling will convert them into only a mixed layered solid and not allow copper and nickel to be separated from each other.

Another refining method includes allowing nickel to undergo a disproportionation reaction with carbon monoxide (CO) to volatilize and separate the product from copper and cobalt. Unfortunately, such a method has a problem in that the use of the toxic CO gas makes it difficult to ensure safety.

Another method used industrially to separate copper and nickel includes roughly separating a mixture of mattes (sulfides). This method includes performing a smelting process to produce mattes containing copper and nickel; and gradually cooling the mattes in a way similar to that mentioned above, to separate a copper-rich sulfide and a nickel-rich sulfide. Unfortunately, this separation method can only roughly separate copper and nickel and needs an additional process, such as electrolytic refining, when nickel and copper should be obtained at high purity.

Other methods have also been studied that include producing chlorides and separating the chlorides based on their difference in vapor pressure. However, such methods involve the process of handling a large amount of toxic chlorine and thus need extensive measures to prevent equipment corrosion and to ensure safety, which is hardly considered suitable for industrial use.

Thus, the pyrometallurgical process for separation and purification of each element has the disadvantage of being limited to a crude separation level or being expensive.

In contrast, the hydrometallurgical process (hereinafter also referred to as "wet process"), which is based on a hydrometallurgical smelting method and includes acid treatment, neutralization, solvent extraction, and other methods, is advantageous in that it is less energy-consuming and able to separate individual valuable components from a mixture and to recover the individual valuable components at a high purity grade.

Unfortunately, when the hydrometallurgical process is used for the treatment of discarded LIBs, hexafluorophosphate anions (an electrolyte component of discarded LIBs) will mix into an acid solution containing the leached valuable components, since the hexafluorophosphate is a hard-to-treat substance that cannot be completely decomposed even with sulfuric acid at high concentration and high temperature. Hexafluorophosphate anions are a water-soluble carbonate ester, which means that it is difficult to recover phosphorus and fluorine from the aqueous solution obtained after the recovery of the valuable components and that there are many environmental restrictions, such as the need to take a variety of measures to reduce the emission of such substances into public marine areas and other areas.

It is also not easy to efficiently leach valuable components from discarded LIBs using only an acid or to obtain a solution that contains leached valuable components and is ready to be subjected to refining. In particular, the main body of the discarded LIB is resistant to acid leaching, and it is not easy to completely leach the valuable components from the discarded LIB. If a strongly oxidizing acid is used to perform aggressive leaching, not only the valuable components but also impurity components, such as aluminum, iron, and manganese, not intended to be recovered industrially, can be leached, which will cause problems, such as the need to treat the impurities by neutralization and other processes, an additional cost for the neutralizing agent, and an increase in the amount of discharged water or the amount of sediments. Furthermore, discarded LIBs may still have a residual charge. Thus, a time-consuming process for releasing the residual charge is necessary since the risk of heat or explosion may remain if the LIBs are treated without any modification.

Thus, using only the hydrometallurgical process to treat discarded LIBs is not always considered an advantageous way.

Under such circumstances, attempts have been made to treat discarded LIBs, which are difficult to treat completely by the pyrometallurgical or hydrometallurgical process alone, by a combination of pyrometallurgical and hydrometallurgical processes, which specifically includes performing a pyrometallurgical process, including the roasting of the discarded LIBs, to remove impurities as much as possible and to produce a homogeneous processed material from the discarded LIBs; and subjecting the processed material to a hydrometallurgical process to separate valuable components from other components.

In the combination of pyrometallurgical and hydrometallurgical processes, fluorine and phosphorus derived from the electrolytic solution can be volatilized and removed by the pyrometallurgical process, while organic components, such as plastics and separators (structural components of the discarded LIBs), can be decomposed by heat. The processed material produced from the discarded LIBs by the pyrometallurgical process is in a homogeneous state and thus provides a homogeneous starting material easy to handle for the hydrometallurgical process.

However, only a simple combination of pyrometallurgical and hydrometallurgical processes still has the problem of recovery loss that cobalt contained in the discarded LIBs is distributed into the slag.

For example, a method is also possible that controls the treatment conditions for the pyrometallurgical process so that cobalt is distributed not into the slag but into the metal, and the distribution of cobalt into the slag is reduced. However, such a method will produce a sparingly soluble corrosion-resistant alloy that is nickel and cobalt-containing copper-based alloy. Since such a corrosion-resistant alloy is hardly soluble in an acid, it will be not possible for the hydrometallurgical process to effectively recover valuable components from the corrosion-resistant alloy.

For example, chlorine gas may be used for the leaching of the corrosion-resistant alloy. In such a case, a solution (leachate) can be obtained which contains a high concentration of copper and relatively low concentrations of nickel and cobalt. From such a solution, nickel and cobalt can be easily separated by a known method, such as solvent extraction, but specifically, it is difficult to achieve easy and low-cost separation of copper from nickel and cobalt. Patent Document 2 discloses an example of a method for separating copper, nickel and cobalt from an alloy containing copper, nickel and cobalt, and Patent Document 3 discloses an example of a method for efficiently recovering cobalt and nickel from a solution containing copper, aluminum and manganese together with cobalt and nickel.

As described above, it was difficult to efficiently separate nickel and/or cobalt and copper from an alloy derived from discarded LIBs containing various components in addition to nickel, cobalt, and copper, which are valuable components.

The problem described above can also occur when nickel and/or cobalt and copper are separated from discarded batteries other than discarded LIBs and when nickel and/or cobalt and copper are separated from alloys derived from materials other than discarded batteries.

### Citation List

### Patent Document

Patent Document 1: Japanese Unexamined Patent Application, Publication No. 2012-172169
Patent Document 2: EP 3690068
Patent Document 3: JP 2015183292

### DISCLOSURE OF THE INVENTION

### Problems to be Solved by the Invention

It is an object of the present invention, which has been made in view of these circumstances, to provide a method for selectively producing nickel and/or cobalt from an alloy including nickel and/or cobalt and copper, such as that derived from discarded lithium ion batteries.

### Means for Solving the Problems

As a result of intensive investigations by the present inventors, the present inventors have found that nickel and/or cobalt can be selectively obtained by separating copper by subjecting an alloy to be treated to acid leaching in the presence of a sulfide and then adding a reducing agent to the obtained leachate so that oxidation-reduction potential thereof is equal to or lower than a predetermined value, arriving at the completion of the present invention.
(1) A first aspect of the present invention relates to an alloy processing method including: a leaching step that includes subjecting an alloy including nickel and/or cobalt and copper to a leaching treatment with an acid solution in the presence of a sulfurizing agent to obtain a leachate and a leached residue; and a reduction step that includes subjecting the leachate to a reduction treatment by adding a reducing agent to the leachate to obtain a post-reduction solution and a reduced residue. In the reduction step, the reduction treatment is performed by controlling an addition amount of the reducing agent so that oxidation-reduction potential is 0 mV or less, as a value determined using a silver/silver chloride electrode as a reference electrode. At least some of the alloy to be subjected to the leaching treatment in the leaching step is used as the reducing agent to be added in the reduction step, or the reduced residue obtained by the treatment in the reduction step is subjected to the leaching treatment in the leaching step.
(2) A second aspect of the present invention relates to the alloy processing method as described in the first aspect, in which the alloy includes an alloy obtained by melting a waste battery of a lithium ion battery.
(3) A third aspect of the present invention relates to the alloy processing method as described in any one of the first or second aspects, in which, in the leaching step, the leaching treatment is performed in the presence of the sulfurizing agent in an amount of 1 equivalent or more and 1.25 equivalents or less with respect to copper contained in the alloy.
(4) A fourth aspect of the present invention relates to the alloy processing method as described in any one of the first to third aspects, in which, in the leaching step, the leaching treatment is performed so that the pH of the obtained leachate is in a range of 0.8 or more and 1.6 or less.

### Effects of the Invention

According to the present invention, it is possible to selectively obtain nickel and/or cobalt from an alloy including nickel and/or cobalt and copper, such as discarded lithium ion batteries.

### BRIEF DESCRIPTION OF THE DRAWINGS

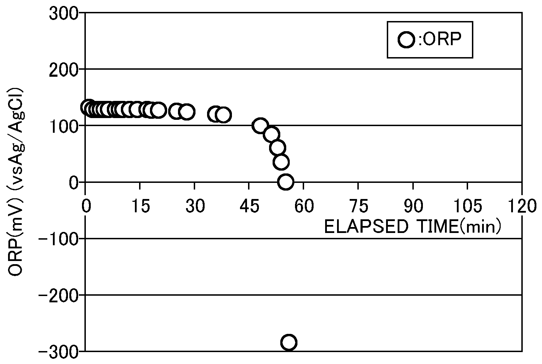

FIG. 1 is a graph showing changes in oxidation-reduction potential (ORP, silver/silver chloride reference electrode) with respect to elapsed time in the reduction treatment performed in Examples.

### PREFERRED MODE FOR CARRYING OUT THE INVENTION

Hereinafter, specific embodiments of the present invention (hereinafter referred to as "embodiments") will be described in detail. It should be noted that the embodiments are not intended to limit the present invention and may be appropriately altered or modified for implementation without departing from the scope of the present invention as defined in the enclosed claims. As used herein, the expression "X to Y", in which X and Y each represent any numerical value, is intended to mean "X or more and Y or less".

An alloy processing method according to the present embodiment is an alloy processing method for producing a solution containing nickel and/or cobalt from an alloy including nickel and/or cobalt and copper.

The alloy including nickel and/or cobalt and copper, which is to be processed, may be produced from, for example, waste derived from degraded vehicles or electronic devices, scrap derived from end-of-life lithium ion batteries, or discarded batteries, such as defective products generated in the battery manufacturing process. An alloy can be used, which is obtained by subjecting such discarded batteries or the like to a pyrometallurgical process to reduce them through heating and melting.

Hereinafter, the alloy processing method will be described in more detail with reference to Examples where an alloy obtained through melting discarded lithium ion batteries (hereinafter also referred to as "discarded LIBs") is subjected to the treatment.

The method according to the present embodiment includes a leaching step S1 that includes subjecting an alloy including nickel and/or cobalt and copper to a leaching treatment with an acid solution in the presence of sulfur to obtain a leachate and a leached residue; and a reduction step S2 that includes subjecting the resulting leachate to a reduction treatment by adding a reducing agent to the leachate to obtain a post-reduction solution and a reduced residue.

### [Leaching Step]

The leaching step S1 includes subjecting an alloy including nickel and/or cobalt and copper to a leaching treatment with an acid. This step may include adding a sulfurizing agent before or simultaneously with bringing the alloy into contact with the acid and includes performing the leaching treatment under conditions in the presence of the sulfurizing agent. The leaching treatment described above produces a leachate, which contains dissolved nickel and/or dissolved cobalt, and a leached residue, which contains copper sulfide as a main component.

In the leaching step S1, reactions (1) to (5) shown below can occur during the leaching treatment. The equations below show a case where the sulfurizing agent and the acid are solid sulfur (S) and sulfuric acid, respectively.
·

   Cu + S → CuS (1)
·

   Ni + H₂SO₄ + 1/2O₂ → NiSO₄ + H₂O (2)
·

   Co + H₂SO₄ + 1/2O₂ → CoSO₄ + H₂O (3)
·

   H₂S + 1/2O₂ → S + H₂O (4)
·

   CuS + 2O₂ → CuSO₄ (5)

Specifically, in the leaching step S1, the alloy is subjected to the leaching treatment with the acid in the presence of the sulfurizing agent, so that copper is leached from the alloy and allowed to react with the sulfurizing agent to form copper sulfide as a precipitate (Reaction Equation (1)). The copper sulfide precipitate is recovered as a leached residue. On the other hand, the leaching treatment with the acid allows nickel and/or cobalt (a component of the alloy) to be leached into the solution, so that a leachate containing nickel and/or cobalt in the form of ions is produced (Reaction Equations (2) and (3)). In this way, copper and nickel and/or cobalt can be separated from the alloy.

The leached nickel and/or cobalt may react with the sulfurizing agent to form a sulfide. Even in such a case, the presence of the acid solution allows decomposition of the sulfide, which allows nickel and cobalt to remain as ions in the leachate. The leachate may also contain some of the copper remaining unreacted with the sulfurizing agent. Such a copper residue remaining in the leachate can be effectively and efficiently separated and removed in the reduction step S2 described later.

The alloy obtained through the melting of discarded lithium ion batteries, which is to be processed, may be provided in any suitable shape, such as a plate-shaped cast alloy or a rod-shaped alloy obtained by appropriately cutting a drawn wire. In particular, the alloy to be processed is preferably in the form of a powder (powdery material). Such a powder will more effectively and efficiently undergo the leaching treatment.

When the alloy is in the form of a powder, the alloy powder preferably has a particle size of approximately 300 µm or less, so that it can more effectively undergo the leaching treatment. On the other hand, if the particle size is too small, the process of forming fine particles may be costly and may cause dust emission or ignition. Thus, the alloy powder preferably has a particle size of approximately 10 µm or more.

Before being subjected to the leaching treatment, the alloy to be processed is preferably subjected to preliminary washing with a diluted acid. This makes the surface of the alloy more active for the treatment, which accelerates the leaching reaction.

As the acid, hydrochloric acid, sulfuric acid, or nitric acid may be used alone or as a mixture. An acid solution prepared by adding a chloride to sulfuric acid may also be used as the acid. In a case where what is called "battery-to-battery" is realized, which is an ideal recycling process that includes recycling and supplying discarded lithium ion batteries as the raw material for discarded lithium ion batteries again, it is preferable to use an acid containing sulfuric acid. By using sulfuric acid as the acid, it is possible to obtain the leachate in the form of a sulfate, which is easy to use as a positive electrode material for lithium ion batteries.

An amount of the acid is 1 equivalent or more, preferably 1.2 equivalents or more, more preferably 1.2 equivalents or more and 5 equivalents or less, with respect to the total amount of nickel and/or cobalt contained in the alloy. By increasing the acid concentration, the leaching reaction rate can be increased.

The leaching treatment may include supplying the alloy and the acid to an apparatus having multiple mixing stages connected, such as a thickener; and bringing stepwise the alloy and the acid into contact with each other in countercurrent flow. For example, the alloy and the acid may be supplied to mixing units of the top and bottom sections of this apparatus, respectively, and the alloy and acid are, in a stepwise manner, brought into contact with each other in countercurrent flow.

The sulfurizing agent, which is added together with the acid, may be sodium hydrosulfide or elemental sulfur. In a case where elemental sulfur is used, it is preferably pulverized into a particle size suitable for acceleration of the reaction.

The amount (coexisting amount) of the sulfurizing agent added is preferably 1 equivalent or more based on the amount of copper in the alloy. The amount of the sulfurizing agent added is preferably 1.5 equivalents or less, more preferably 1.25 equivalents or less, based on the amount of copper in the alloy. Too much addition of the sulfurizing agent may increase the production of the residue rather than contribute to the acceleration of the reactions and thus increase the labor of handling the residue and increase the risk of generation of hydrogen sulfide gas.

With regard to the conditions in the leaching treatment, such as the temperature and time of the leaching treatment and the concentration of the slurry to be obtained by adding the acid solution and the sulfurizing agent to the alloy, it is preferable to perform preliminary tests to determine suitable ranges of the treatment conditions. In the leaching treatment, the leachate may be bubbled with air or the like to ensure that the reactions proceed uniformly. In the leaching treatment, divalent copper ions may be added. Thereby, the divalent copper ions will act as a catalyst and will accelerate the leaching reactions.

In particular, the leaching treatment preferably includes measuring the oxidation-reduction potential (ORP) and pH of the resulting leachate and controlling the ORP and pH. Specifically, the ORP value is preferably controlled to fall within the range of 240 mV or more and 280 mV or less as measured using a silver/silver chloride electrode as reference. The treatment may be performed while controlling the pH of the leachate to be obtained to be in the range of 0.8 or more and 1.6 or less. By performing the leaching treatment in such a range, leaching is accelerated, and the deposited copper sulfide can be suppressed from being excessively oxidized and redissolved.

At what point the leaching reactions should be ended may be determined through measuring the ORP of the leachate. For example, in a situation where no alloy is newly charged into the reaction vessel, the point at which a reduction in the ORP value of the leachate is no longer observed may be determined to be the end point of the leaching reaction of nickel and/or cobalt.

Note that if the deposited copper sulfide is oxidized after the leaching treatment of the alloy is finished, the copper may be re-leached. Therefore, the ORP of the obtained leachate is preferably maintained in the range of 240 mV to 280 mV until the leachate and the copper sulfide are separated.

### [Reduction Step]

The reduction step S2 includes subjecting the leachate resulting from the leaching treatment of the leaching step S1 to a reduction treatment by adding a reducing agent to the leachate to obtain a reduced solution (post-reduction solution), which contains nickel and/or cobalt, and a reduced residue.

In the leaching treatment, copper is sometimes partially leached together with nickel and/or cobalt from the alloy and dissolved into the acid solution, and sometimes partially remains unreacted with the sulfurizing agent in the solution. For example, when the leaching treatment is performed while controlling the ORP of the resulting leachate to be more than 280 mV, copper tends to be leached simultaneously with nickel and/or cobalt so that the leachate may contain a certain amount of copper, although the leaching rate of nickel and/or cobalt will be high. Similarly, when the leaching treatment is performed while controlling the pH of the leachate to be less than 0.8, copper tends to be leached simultaneously with nickel and/or cobalt so that the leachate may contain a certain amount of copper, although the leaching rate of nickel and/or cobalt will be high.

In the reduction step S2, therefore, such a small amount of copper remaining in the resulting leachate is reduced to form a copper-containing precipitate. The resulting reduced residue including the precipitate can be separated by solid-liquid separation, so that a reduced solution containing nickel and/or cobalt can be obtained, from which copper has been separated. Thus, copper is selectively separated while the leaching rate of nickel and/or cobalt is kept high.

At this time, the method according to the present embodiment is characterized in that the reduction treatment is performed by controlling the addition amount of the reducing agent so that the ORP (reference electrode: silver/silver chloride electrode) of the leachate is 0 mV or less. Thereby, copper remaining in the leachate can be more effectively reduced, and the copper concentration in the resulting post-reduction solution can be further decreased.

The reducing agent is typically, but not limited to, a metal more base than copper. In particular, a metallic material including nickel and/or cobalt is preferably used and brought into contact with the leachate to reduce copper. More specifically, the metallic material including nickel and/or cobalt may be an alloy including nickel and/or cobalt and copper, which may be the same as the material to be processed by the method according to the embodiment, namely the material to be subjected to the leaching treatment of the leaching step S1. The reducing agent may be not only a single-component material but also a mixture composed of two or more components.

In the method according to the present embodiment, which is to produce a solution containing nickel and/or cobalt, using as a reducing agent a metallic material including nickel and/or cobalt, which is a target to be recovered, is industrially advantageous because such a reducing agent does not need to be recovered by any additional later step. Moreover, of course, the metallic material including nickel and/or cobalt, used as the reducing agent, will oxidize and dissolve into the post-reduction solution to increase the amount of recovered nickel and/or cobalt.

Besides the metallic material, a sulfide may also be used as the reducing agent. The sulfide may be solid, liquid, or gas (gaseous). The reducing agent may also be a mixture of sulfur and a powder of the alloy, which is the target of the leaching treatment. When used as the reducing agent, sulfur may be added in an amount equivalent to the amount of copper in the liquid to be treated or the alloy powder.

The alloy to be processed may be used as the reducing agent. In a case where the alloy powder itself, which is the same as the material to be subjected to the leaching treatment, is used as the reducing agent, it should include at least the equivalent amount of nickel and/or cobalt required for the reduction of copper in the leachate.

The reduction treatment is preferably performed under conditions controlled to produce a post-reduction solution with a pH of 1.6 or less, likewise to the leachate. The liquid temperature is preferably 50°C or more, likewise to the leaching treatment. As a guide, the point at which the ORP reaches 0 mV or less may be used as the end point at which the removal of copper is completed (reaction end point).

By such a reduction treatment, a reduced solution containing nickel and/or cobalt and a reduced residue can be obtained, and the reduced solution and the reduced residue can be separated and recovered by solid-liquid separation of the obtained slurry. The separated and recovered reduced residue is a precipitate mainly containing copper, but a part of nickel and/or cobalt may be contained as a precipitate together with copper. Therefore, the reduced residue that is produced by the reduction treatment and that is separated and recovered can be repeatedly subjected to the leaching treatment in the leaching step S1. Thereby, the leaching treatment is performed together with an alloy raw material to be newly processed, and recovery loss of nickel and/or cobalt can be suppressed.

### EXAMPLES

Hereinafter, the present invention will be described more specifically with reference to Examples, which are not intended to limit the present invention at all.

### [Example 1]

### (Leaching Step)

A powdery alloy (powdery material) having a particle diameter of 300 µm or less obtained by subjecting waste lithium ion batteries (waste LIBs) to the pyrometallurgical process, where the waste lithium ion batteries are melted by heating and reducing, was used as an alloy to be processed. The composition of the alloy is shown in Table 1 below.

**[Table 1]**

| | Ni | Co | Cu | Fe |
|---|---|---|---|---|
| Alloy (mass%) | 24 | 12 | 62 | 1.5 |

Specifically, 300 g/L of the alloy powder having the composition shown in Table 1 was used. A sulfuric acid solution was added, and sulfur (sulfurizing agent) was added in an amount of 1.25 equivalents to copper in the powdery material to perform leaching treatment. The liquid temperature was 60°C.

After the leaching treatment, filtration was performed to separate the mixture into solid and liquid, i.e., the filtrate (leachate) and the leached residue. The obtained leachate was analyzed using an ICP analyzer to determine the concentration of each element component. The analysis result is shown in Table 2 below. The leaching rates of nickel and cobalt were both 99%.

**[Table 2]**

| | Ni | Co | Cu | Fe |
|---|---|---|---|---|
| Leachate concentration (g/L) | 80 | 40 | 2.8 | 5 |

### (Reduction Step)

One liter of the obtained leachate was prepared, 100 g of a powdery material having the composition shown in Table 1 having a particle size of 1 µm to 300 µm was added as a reducing agent, and sulfur was further added in an amount of 1.25 equivalents to the amount of copper in the powdery material and copper ions in the solution, and the leachate was subjected to the reduction treatment.

Specifically, in the reduction treatment, the liquid temperature was maintained at 60°C, and the addition amount of the reducing agent was controlled so that the oxidation-reduction potential was lowered to and maintained at 0 mV, while measuring the oxidation-reduction potential (ORP, vs Ag/AgCl). The reduced product obtained by such reduction treatment was subjected to solid-liquid separation by filtration to recover the post-reduction solution and the reduced residue. FIG. 1 is a graph showing changes of ORP with respect to elapsed time in the reduction treatment.

The concentration of each elemental component of the obtained post-reduction solution was measured using an ICP analyzer.

**[Table 3]**

| | Ni | Co | Cu | Fe |
|---|---|---|---|---|
| Post-reduction solution concentration (g/L) | 87 | 43 | <0.01 | 5 |

As shown in Table 3, copper removal was possible to an extent that the copper concentration was less than 0.01 g/L.

## Claims

1. An alloy processing method comprising:
a leaching step that comprises subjecting an alloy comprising nickel and/or cobalt and copper to a leaching treatment with an acid solution in the presence of a sulfurizing agent to obtain a leachate and a leached residue; and
a reduction step that comprises subjecting the leachate to a reduction treatment by adding a reducing agent to the leachate to obtain a post-reduction solution and a reduced residue,
wherein, in the reduction step, the reduction treatment is performed by controlling an addition amount of the reducing agent so that oxidation-reduction potential of the leachate is 0 mV or less, as a value determined using a silver/silver chloride electrode as a reference electrode;
wherein at least some of the alloy to be subjected to the leaching treatment in the leaching step is used as the reducing agent to be added in the reduction step, or
wherein the reduced residue obtained by the treatment in the reduction step is subjected to the leaching treatment in the leaching step.

2. The alloy processing method according to claim 1, wherein the alloy includes an alloy obtained by melting a waste battery of a lithium ion battery.

3. The alloy processing method according to claim 1, wherein, in the leaching step, the leaching treatment is performed in the presence of the sulfurizing agent in an amount of 1 equivalent or more and 1.25 equivalents or less with respect to copper contained in the alloy.

4. The alloy processing method according to claim 1, wherein, in the leaching step, the leaching treatment is performed so that the pH of the obtained leachate is in a range of 0.8 or more and 1.6 or less.

## Patentansprüche

1. Verfahren zur Bearbeitung einer Legierung, umfassend:
ein Laugungsschritt, der das Aussetzen einer Nickel- und/oder Kobalt- und Kupfer-enthaltenden Legierung einer LaugungsBearbeitung mit einer Säurelösung in Gegenwart eines Schwefelungsmittels umfasst, um eine Laugungslösung und einen Laugungsrückstand zu erhalten; und
einen Reduktionsschritt, der das Unterziehen der Laugungslösung einer ReduktionsBearbeitung durch Zugeben eines Reduktionsmittels zu der Laugungslösung zum Erhalten einer Lösung nach der Reduktion und eines Reduktionsrückstands umfasst,
wobei in dem Reduktionsschritt die ReduktionsBearbeitung durch Steuern einer Zugabemenge des Reduktionsmittels durchgeführt wird, sodass das Oxidations-Reduktions-Potential der Laugungslösung als ein unter Verwendung einer Silber/Silberchlorid-Elektrode als Referenzelektrode bestimmter Wert 0 mV oder weniger beträgt;
wobei zumindest ein Teil der Legierung, die der LaugungsBearbeitung in dem Laugungsschritt unterzogen werden soll, als das Reduktionsmittel verwendet wird, das in dem Reduktionsschritt zugegeben werden soll, oder
wobei der Reduktionsrückstand, der durch die Bearbeitung in dem Reduktionsschritt erhalten wird, der LaugungsBearbeitung in dem Laugungsschritt unterzogen wird.

2. Verfahren zur Bearbeitung einer Legierung nach Anspruch 1, wobei die Legierung eine Legierung einschließt, die durch Schmelzen einer Altbatterie einer Lithium-Ionen-Batterie erhalten wird.

3. Verfahren zur Bearbeitung einer Legierung nach Anspruch 1, wobei, in dem Laugungsschritt, die LaugungsBearbeitung in Gegenwart von dem Schwefelungsmittel in einer Menge von 1 Äquivalent oder mehr und 1,25 Äquivalenten oder weniger in Bezug auf in der Legierung enthaltenes Kupfer durchgeführt wird.

4. Verfahren zur Bearbeitung einer Legierung nach Anspruch 1, wobei, in dem Laugungsschritt, die LaugungsBearbeitung so durchgeführt wird, dass der pH-Wert der erhaltenen Laugungslösung in einem Bereich von 0,8 oder mehr und 1,6 oder weniger liegt.

## Revendications

1. Procédé de traitement d'alliage comprenant :
une étape de lixiviation, qui comprend le fait de soumettre un alliage composé de nickel et/ou de cobalt et de cuivre à un traitement de lixiviation avec une solution acide en présence d'un agent de sulfuration afin d'obtenir un lixiviat et un résidu lixivié ; et
une étape de réduction, qui comprend le fait de soumettre le lixiviat à un traitement de réduction en ajoutant un agent réducteur au lixiviat pour obtenir une solution de post-réduction et un résidu réduit,
dans lequel, dans l'étape de réduction, le traitement de réduction est réalisé en ajustant la quantité d'ajout de l'agent réducteur de sorte que le potentiel d'oxydoréduction du lixiviat soit de 0 mV ou moins, en tant que valeur déterminée en utilisant une électrode argent/chlorure d'argent en tant qu'électrode de référence ;
dans lequel au moins une partie de l'alliage à soumettre au traitement de lixiviation dans l'étape de lixiviation est utilisée en tant qu'agent réducteur à ajouter dans l'étape de réduction, ou
dans lequel le résidu réduit obtenu par le traitement dans l'étape de réduction est soumis au traitement de lixiviation dans l'étape de lixiviation.

2. Procédé de traitement d'un alliage selon la revendication 1, dans lequel l'alliage comprend un alliage obtenu par fusion d'une batterie lithium-ion usagée.

3. Procédé de traitement d'un alliage selon la revendication 1, dans lequel, dans l'étape de lixiviation, le traitement de lixiviation est réalisé en présence de l'agent de sulfuration en une quantité de 1 équivalent ou plus et de 1,25 équivalents ou moins par rapport au cuivre contenu dans l'alliage.

4. Procédé de traitement d'un alliage selon la revendication 1, dans lequel, dans l'étape de lixiviation, le traitement de lixiviation est réalisé de sorte que le pH du lixiviat obtenu soit dans une plage de 0,8 ou plus et de 1,6 ou moins.
